# FASCICULE DE BREVET EUROPEEN

(11) **EP 3 213 307 B1**
(45) Date de publication et mention de la délivrance du brevet: **12.12.2018**
(21) Numéro de dépôt: 15808777.5
(22) Date de dépôt: 22.10.2015
(51) Int. Cl.: G08B 13/196, B64D 45/00

(54) **PROCÉDÉ ET SYSTÈME DE SURVEILLANCE ET DE SÉCURISATION D'UNE ENCEINTE DE VÉHICULE, NOTAMMENT D'UN AVION.**
VERFAHREN UND SYSTEM ZUR ÜBERWACHUNG UND SICHERUNG EINER KABINE EINES FAHRZEUGS, INSBESONDERE EINES FLUGZEUGS
METHOD AND SYSTEM FOR MONITORING AND SECURING AN ENCLOSURE OF A VEHICLE, IN PARTICULAR OF AN AIRCRAFT

(30) Priorité: 28.10.2014 FR 1460358
(43) Date de publication de la demande: 06.09.2017
(73) Titulaire: Latecoere, 31500 Toulouse (FR)
(72) Inventeur: GÉRARD, Boucourt, F-31180 Rouffiac Tolosan (FR)
(74) Mandataire: Junca, Eric
(86) Numéro de dépôt international: PCT/IB2015/058158
(87) Numéro de publication internationale: WO 2016/067168

(56) Documents cités:
- EP-A2- 2 239 198
- EP-A2- 2 680 578
- WO-A2-2006/022824
- GB-A- 2 393 614
- US-A1- 2004 145 498
- US-B1- 6 744 381

## Description

### DOMAINE DE L'INVENTION ET ÉTAT DE LA TECHNIQUE

L'invention se rapporte à un procédé de surveillance et de sécurisation optimisées de l'intérieur d'une enceinte de véhicule, notamment d'une cabine passagers d'un avion, ainsi qu'à un système destiné à mettre en oeuvre un tel procédé. La surveillance concerne plus particulièrement le cockpit, la cabine passagers et/ou la soute (« cargo » en terminologie anglaise) de l'avion, mais peut s'étendre à d'autres volumes, telles que l'empennage, les ailes ou l'environnement immédiat de l'avion.

Le domaine de l'invention est celui de la surveillance en vue de la sécurisation d'une enceinte de véhicule par la transmission d'images provenant de caméras disposées en général à l'intérieur du véhicule sur des écrans de visualisation. L'invention s'applique en particulier aux avions, mais peut également s'appliquer à toute enceinte de véhicule comprenant également un poste de pilotage, tel que train, bateau, autocar, etc.

Les images formées par les caméras d'un système de surveillance, installées par exemple dans le cockpit et dans la cabine passagers, peuvent être transmises à partir d'un émetteur commun à une station au sol via un satellite. De telles installations, illustrées par exemple par le document de brevet US 5742 336, permettent d'enregistrer les images et éventuellement le son, afin d'examiner ultérieurement les conditions de vol qui prévalaient lors d'une défaillance ou d'un accident de l'avion.

Il est également connu du document de brevet US 6 864 805 un système de surveillance de l'espace interne d'un avion comportant des caméras disposées de manière stratégique dans la cabine de l'avion ainsi que des écrans de visualisation reliés aux caméras par câblage et installés dans le cockpit. De plus, les membres de l'équipage évoluant dans la cabine portent des émetteurs qui peuvent activer via un récepteur - en cas d'urgence-les caméras, les écrans de visualisation et une alerte visuelle située dans le cockpit.

Par ailleurs, le document de brevet US 7 792 189 prévoit un système de surveillance multi-caméras dans une cabine d'avion destiné à visualiser des images sur des écrans d'affichage disposés en cabine ou sur des écrans d'ordinateurs, les écrans d'affichage et les ordinateurs étant câblés sur un réseau en liaison avec des serveurs de stockage d'images. Le système est capable, à travers le réseau et les serveurs, d'afficher sur un écran une image sélectionnée par un membre d'équipage provenant d'une des caméras, ou des images provenant simultanément de plusieurs caméras installées en différents emplacements. Le document EP2239198 est considéré comme étant l'art antérieur le plus proche.

Cependant, de tels systèmes ne sont plus adaptés aux conditions de surveillance complexes qu'imposent les configurations actuelles de certains véhicules, en particulier de cabines d'avion, et aux conditions de surveillance rigoureuse qu'imposent les actes de subversion ou de terrorisme potentiels dans ce type d'enceinte. Ainsi, les cabines d'avion actuelles ne permettent plus au personnel navigant de surveiller la cabine à chaque instant, en particulier lorsque leurs postes d'observation n'ont plus de vue directe sur une partie de la cabine.

Par exemple, dans des phases critiques de décollage, d'atterrissage ou de vol en zones de turbulence, le personnel navigant est en poste sur un siège, derrière une cloison, un rideau, un office (« galley » en terminologie anglaise) ou autre zone d'occultation du champ de vision.

De plus, les équipements de visualisation connus sont destinés à réaliser une interface Homme/Machine unique sans possibilité réelle de reconfiguration ni d'interopérabilité entre les équipements des personnels navigants de cabine, les équipements mobiles des passagers et les écrans de visualisation du personnel de pilotage dans le cockpit.

### EXPOSÉ DE L'INVENTION

L'invention vise à optimiser la surveillance et la sécurisation d'au moins une enceinte donnée, en particulier une enceinte d'avion telle que cabine, cockpit ou cargo, en permettant une vision constante et complète de l'enceinte, ainsi qu'une appréciation modulée de son état de sécurité.

Pour ce faire, l'invention propose de transmettre les images de l'enceinte par liaison sans fil à un support mobile. Ce support mobile assiste le personnel navigant, où qu'il se trouve, dans l'appréciation de la situation et dans les mesures à prendre par ledit personnel en cas de situation sensible au plan sécuritaire.

Plus précisément, la présente invention a pour objet un procédé de surveillance et de sécurisation optimisées d'au moins une enceinte de véhicule, notamment un cockpit de pilotage, une cabine passagers et/ou un cargo de stockage d'un avion, dans lequel une ou des prises de vue réparties dans l'enceinte, pour définir un champ de vision sur sensiblement toute l'enceinte, fournissent dans une étape de transmission des flux d'images à au moins un support de visualisation mobile pouvant se déplacer avec un membre d'équipage, rester à chaque instant en communication avec lui et se connecter par liaison sans fil à d'autres supports mobiles et/ou fixes, ainsi qu'à des éléments clés de l'enceinte dans des zones sensibles au plan sécuritaire.

De plus, le ou chaque support de visualisation est paramétré selon différents modes de visualisation permettant de basculer, à chaque mode, entre des configurations d'affichage, des configurations de transmission d'information, et des configurations de surveillance passive et active de l'enceinte.

En outre, si un degré d'état non sécurisé est sélectionné pour définir la situation sécuritaire de l'enceinte, le support de visualisation passe en configuration active d'alerte dans laquelle des actions modulées sont proposées sur les éléments clés, des alarmes et des actions modulées étant automatiquement déclenchées selon le degré d'état non sécurisé sélectionné à partir d'un traitement d'image et/ou du son, et transmis aux membres d'équipage en fonction de la phase de transport.

Selon une forme de mise en oeuvre préférée, les modes de visualisation donnent accès à au moins certaines des configurations suivantes: en mode affichage entre des configurations d'affichage simple, en mosaïque et figée, en mode communication entre des configurations de transmission d'informations, de transmission d'annonces de sécurité et de transmission à un système de visualisation individualisé dit de divertissement destiné à chaque passager, en mode surveillance d'enceinte entre une configuration de surveillance dite passive et une configuration de surveillance dite active d'alerte. La configuration de surveillance passive est choisie entre l'une des configurations d'affichage et une configuration de comparaison entre des données auxiliaires évolutives, se rapportant à la configuration d'affichage choisie et fournies à partir des flux d'images visualisées et/ou d'une centrale de gestion, et des données préenregistrées traduisant différents degrés d'états sécurisés et non sécurisés.

Avantageusement, le paramétrage en configurations multiples du support mobile n'est pas lié à la position dudit support mais à son utilisation optimisée à chaque instant par les possibilités d'actions multifonctionnelles qu'il offre en fonction du besoin en utilisation.

Selon des formes de mise en oeuvre avantageuses:
- les prises de vue sont associées à des prises sonores, ainsi qu'à des détections de température et/ou de pression; ainsi, le support de visualisation peut recevoir des flux d'images et de sons combinés à des données auxiliaires, ce qui permet alors d'avoir un nombre élevé de paramètres gérés de manière optimisée par les configurations du support;
- les prises de vue sont opérées dans une bande spectrale choisie entre la bande visible - proche infrarouge et la bande infrarouge afin de détecter des températures supérieures à une valeur prédéfinie et/ou une vision de nuit non intrusive;
- l'une des prises de vue d'une enceinte est mobile et autonome pour surveiller une zone particulière d'enceinte, en particulier une zone occupée par une personne malade ou susceptible de l'être ou autre zone sensible à surveiller plus particulièrement pendant une période de temps appropriée;
- les configurations de visualisation passive des flux d'images affichent, comme données auxiliaires évolutives utiles à la surveillance, des données techniques, en particulier des données de variation de température en enceinte et/ou à l'extérieur du véhicule, d'altitude, de visibilité, de pression en enceinte et/ou à l'extérieur du véhicule, des données sonores et/ou de durée écoulée depuis le début d'un événement pouvant modifier sensiblement le flux d'images d'une même prise de vue ou un état de verrouillage d'un élément clé;
- au moins une prise de vue est installée à l'extérieur du véhicule, en particulier derrière une porte / hublot et/ou une peau de véhicule, avantageusement avec un éclairage additionnel adapté au mode nuit;
- les prises de vue transmettent également les flux d'images et de sons à au moins un support de visualisation fixe situé dans le poste de pilotage du véhicule;
- les modes et les configurations du support de visualisation sont choisis par un membre d'équipage commercial / technique qui gère ledit support selon la phase de transport, notamment selon la phase de vol pour un avion;
- le support de visualisation identifie par biométrie ou par codage chaque membre d'équipage habilité à utiliser ce support avec des configurations prédéfinies pour ce membre d'équipage selon ses fonctions;
- dans le cas où le véhicule est un avion, la configuration du support de visualisation est figée selon une configuration automatique pendant des phases de vol critiques de décollage, d'atterrissage et/ou de turbulences, en fonction de données d'état fournies par la centrale avionique ou fournies par géolocalisation en liaison avec des données des répéteurs A / C;
- les prises de vue ont un champ de vision variable, en particulier champ réduit, grand champ et panoramique, activé par action sur une commande du support de visualisation qui transmet des signaux de réglage des champs de vision aux prises de vue;
- la transmission d'images, la transmission de signaux de réglage de champ de vision et les connexions sans fil aux éléments clés sont cryptées;
- une corrélation de cohérence de signal entre les prises de vue est établie afin de fiabiliser les données auxiliaires évolutives et, le cas échéant, le degré d'état sécurisé ou non sécurisé sélectionné;
- les capacités de traitement des données d'images sont réparties entre les prises de vue et les supports de visualisation;
- des séquences audio / vidéo sont enregistrées à partir de la sélection d'un premier degré d'état non sécurisé;
- des liaisons entre le véhicule et le sol fournissent des mises à jour des configurations des supports de visualisation;
- à partir d'un degré d'état non sécurisé, les supports de visualisation peuvent être coupés selon un mode choisi entre l'entrée d'un code de désactivation, une double lecture de reconnaissance, en particulier d'un badge ou équivalent, et une désactivation automatique, puis les supports de visualisation basculent en mode enregistrement.

L'invention se rapporte également à un système de surveillance et de sécurisation optimisées de l'intérieur d'une enceinte de véhicule, notamment un cockpit, une cabine et/ou un cargo d'avion, destiné à mettre en oeuvre le procédé défini ci-dessus. Un tel système comporte une ou des caméras vidéo réparties dans l'enceinte, de sorte à définir un champ de vision sur sensiblement toute l'enceinte. Des supports de visualisation mobiles dédiés à des membres du personnel commercial de l'enceinte sont aptes, via des moyens d'émission / réception de liaison sans fil adaptés, à recevoir des flux d'images émis par les caméras vidéo, à leur transmettre des commandes, et à communiquer en transmission bilatérale avec des sources de données auxiliaires ainsi qu'avec des moyens de verrouillage / déverrouillage de l'enceinte agencés dans des zones sensibles au plan sécuritaire. De plus, des moyens d'actions modulées peuvent être déclenchés sur les moyens de verrouillage / déverrouillage, ainsi que des alarmes et des actions modulées selon le degré d'état non sécurisé sélectionné à partir d'un traitement d'image et/ou du son, et transmis aux membres d'équipage en fonction de la phase de transport.

Selon des modes de réalisation préférés:
- les caméras vidéo peuvent être associées à un microphone couplé à une carte de traitement du son en signal de transmission, ainsi qu'à des sondes de température et de pression;
- les caméras vidéo sont numériques à capteurs photosensibles dans des bandes spectrales pouvant basculer entre la bande visible - proche infrarouge et la bande infrarouge, et sont équipées d'un module de traitement numérique des signaux provenant des capteurs photosensibles, de la carte de traitement du son ainsi que des signaux transmis par les sondes de température et de pression;
- au moins une caméra vidéo est mobile et autonome en alimentation électrique;
- au moins un objectif de caméra vidéo pourvu de moyens d'éclairage dédiés est monté à l'extérieur du véhicule, en particulier sous ou derrière un hublot ou une porte dans le cas où le véhicule est un avion, pour notamment surveiller des volets et des moteurs de l'avion;
- le véhicule ayant un poste de pilotage, un cockpit dans le cas d'un avion, au moins un support de visualisation fixe est installé sur une embase de ce poste de pilotage;
- les caméras vidéo ont des moyens de variation du champ de vision et/ou de zoom commandés par le support de visualisation via les moyens d'émission / réception de liaison sans fil;
- des moyens d'enregistrement des images vidéo et de sons des caméras vidéo sont prévus en connexion avec les supports de visualisation soit dans le véhicule soit au sol par des moyens adaptés d'émission / réception de liaison sans fil;
- les moyens de verrouillage qui équipent des portes d'accès d'enceinte d'un véhicule et d'accès / sortie du véhicule, des portes d'évacuation d'urgence, et des portes de toilette transmettent par liaison sans fil des informations d'état de verrouillage / déverrouillage aux supports électroniques de visualisation;
- les supports de visualisation, équipés d'une puce de géolocalisation d'une communication sans fil reliée à un transpondeur interne en modes A / C lui-même relié à une centrale avionique, sont en liaison véhicule / sol via un serveur sans fil et un routeur, le routeur étant en connexion émetteur / récepteur avec une base au sol, afin de transmettre au sol des données relatives à l'état de sécurisation du véhicule et de recevoir de la base au sol des mises à jour programmées de données et nouvelles configurations à intégrer dans les supports de visualisation.

### PRÉSENTATION DES FIGURES

D'autres caractéristiques et avantages de l'invention apparaîtront à la lecture de la description qui suit et qui se rapporte à un exemple détaillé de réalisation, en référence aux figures annexées qui représentent, respectivement :
- la figure 1, une vue schématique en perspective d'un avion présentant une peau transparente équipé d'un système de surveillance et de sécurisation selon l'invention;
- la figure 2, une vue intérieure en perspective de la cabine passagers de l'avion selon la figure 1;
- la figure 3, une vue en perspective du cockpit de l'avion selon la figure 1;
- la figure 4, une vue latérale de l'intérieur du cargo de l'avion selon la figure 1,
- la figure 5, une vue en coupe schématique d'une caméra vidéo du système selon la figure 1, et
- les figures 6a à 6g, différentes configurations d'une tablette de visualisation du système selon la figure 1, respectivement en configurations figée (figure 6a), simple (figure 6b), mosaïque (figure 6c), en configurations de transmission d'informations (figure 6d) ou de transmission à un système de visualisation individualisé (figure 6e), et en configurations de visualisations passive (figure 6f) ou active d'alerte (figure 6g).

### DESCRIPTION DETAILLEE D'UN EXEMPLE DE REALISATION

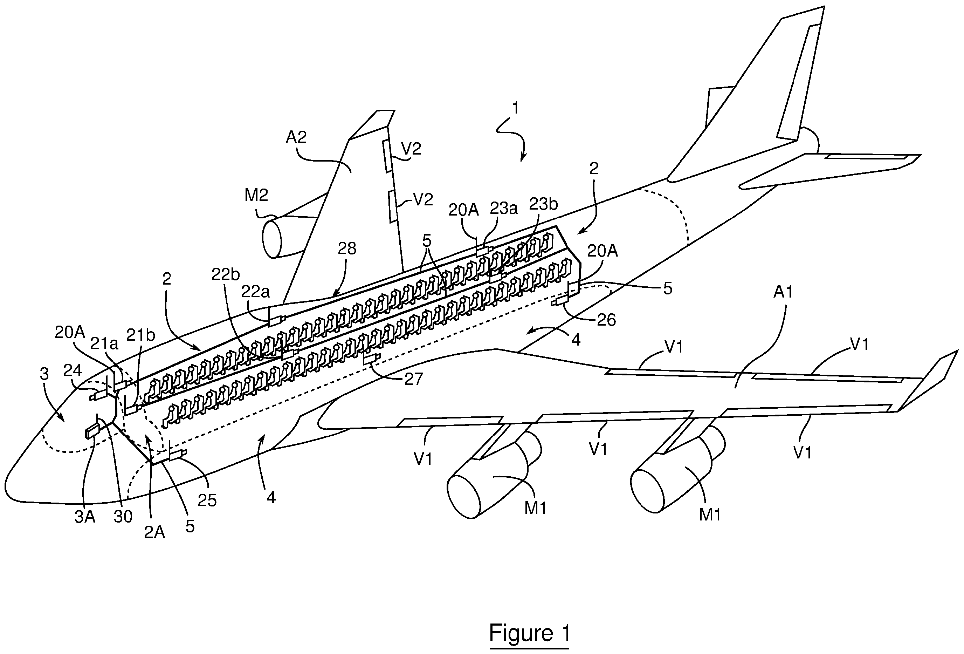

Un système de surveillance et de sécurisation selon l'invention équipe, en référence à la vue schématique en perspective de la figure 1, un avion 1 - présentée avec une peau transparente afin de visualiser l'intérieur - comportant notamment une cabine passagers 2, un cockpit de pilotage 3 et un cargo de stockage de marchandise à transporter 4. Dans ce système, deux séries parallèles de trois caméras vidéo 21a à 23a, 21b à 23b, sont réparties dans la cabine passagers 2 pour embrasser, en combinaison, tout le champ de vision directement accessible de ladite cabine 2. De plus, une caméra vidéo 24 est installée dans le cockpit de pilotage 3 et deux caméras vidéo 25, 26 dans le cargo 4.

Les caméras vidéo 21a à 23a, 21b à 23b, 24 à 26 sont équipées d'antennes 20A dédiées à l'émission / réception de signaux de flux d'images et sont alimentées par des câbles électriques 5. En variante, certaines des caméras 21a à 23a, 21b à 23b, 24 à 26 peuvent être reliées par câbles pour fournir les flux d'images. Le cockpit de pilotage 3 est équipé d'un support de visualisation fixe 3A des flux d'images émis par les caméras 21a à 23a, 21b à 23b, 24 à 26.

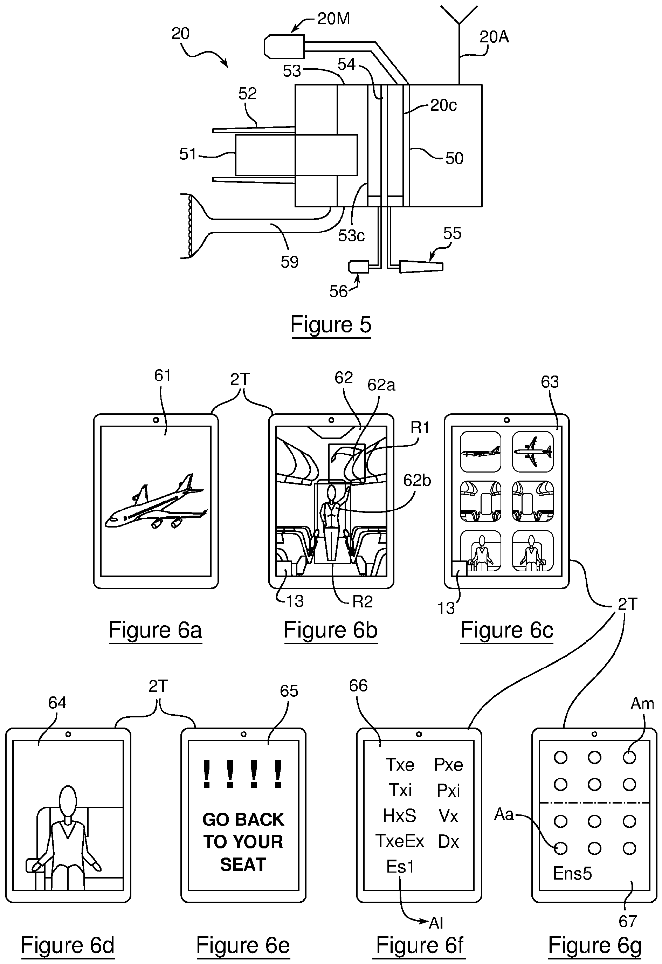

Avantageusement, toutes les caméras vidéo 21a à 23a, 21b à 23b, 24 à 26 sont équipées d'un microphone 20M et d'un convertisseur du son 20C (cf. figure 5) en signal de transmission émis par les antennes d'émission / réception 20A (cf. figure 5) desdites caméras 21a à 23a, 21b à 23b, 24 à 26.

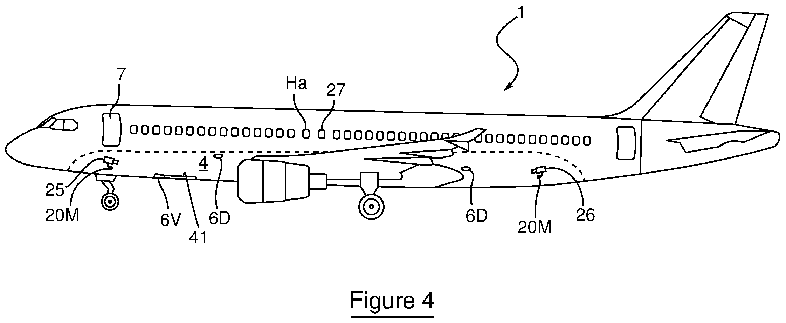

D'autres caméras vidéo 27 et 28 sont également montées à l'extérieur de la peau d'avion 1, sous un hublot Ha (cf. figure 4), de chaque côté de la cabine 2. Ces caméras 27, 28 sont pourvues d'un éclairage à diodes 59, ou en variante, associées à cet éclairage agencé à proximité, afin d'illuminer, de nuit, les éléments qui sont plus particulièrement surveillés, à savoir les volets V1, V2 des ailes A1, A2, et les moteurs M1, M2 de l'avion 1 dans le présent exemple. Les caméras vidéo 27 et 28 sont également équipées d'antennes d'émission / réception 20A situées dans la cabine 2.

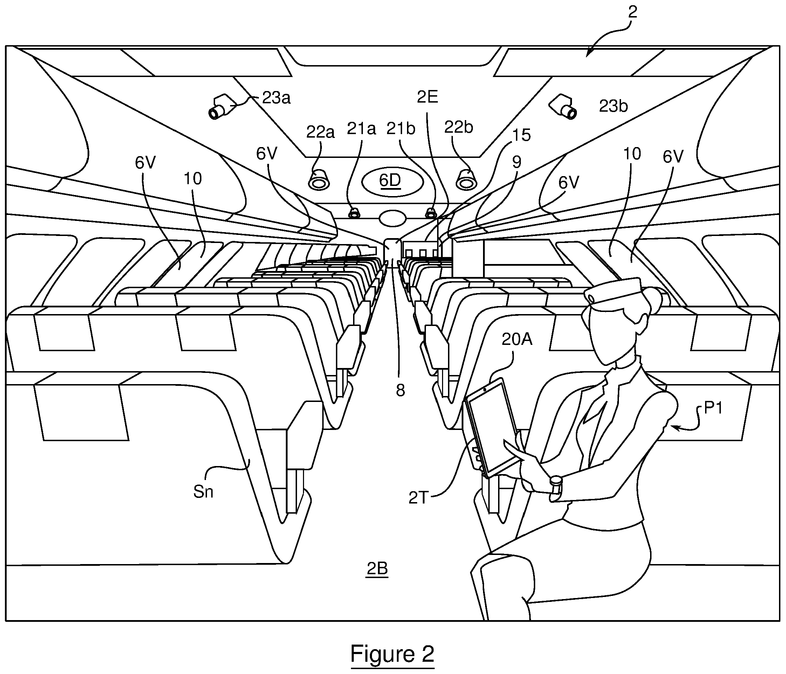

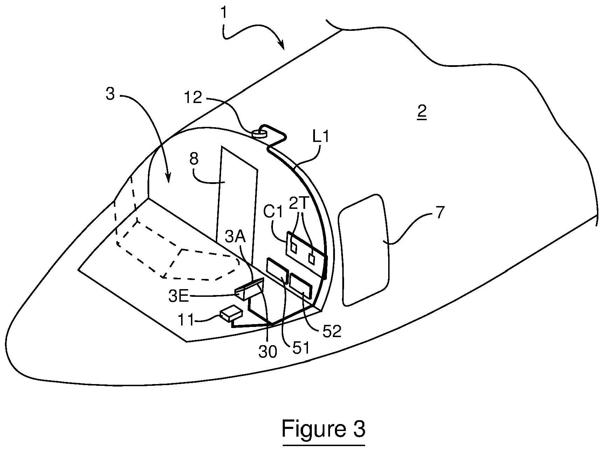

Dans la cabine passagers 2 de la figure 2, les flux d'images des caméras 21a à 23a, 21b à 23b sont captés par des antennes d'émission / réception 20A de tablettes électroniques de visualisation 2T, servant de supports de visualisation et détenues par les membres du personnel commercial P1. De plus, ces tablettes électroniques 2T sont en liaison sans fil avec les détecteurs de fumée / incendie 6D, ainsi qu'avec des commandes de verrouillage / déverrouillage 6V des portes de cabine, à savoir la porte principale d'accès / sortie d'avion 7 (cf. figure 3), la porte d'accès au cockpit 8, des portes de toilette 9 et des portes d'évacuation d'urgence 10.

Les liaisons sans fil, de manière générale, sont réalisées dans des bandes de radiofréquences dédiées à la transmission de préférence par WIFI, mais aussi selon le format DVB-T ou DVB-T2, ou encore en modulation d'amplitude de type LIFI dans la bande de fréquences du visible voire proche infrarouge.

Les caméras vidéo 21a à 23a, 21b à 23b, 24 à 26 (cf. figure 1) sont ici des caméras CCD numériques à capteurs photosensibles dans une bande spectrale pouvant commuter entre une bande infrarouge et une bande visible - proche infrarouge. L'éclairage proche infrarouge permet un éclairage discret, particulièrement utile en mode nuit.

Alternativement, des caméras CCD numériques sensibles utilisées dans la bande spectrale visible-proche infrarouge sont complétées par des caméras thermiques, permettant de suivre une évolution importante et rapide de la température dans une zone précise, par exemple là où a lieu un regroupement de personnes ou en cargo pour suivre une augmentation anormale de la température.

Par ailleurs l'une des caméras 21a à 23a, 21b à 23b ou, alternativement, une caméra supplémentaire, est mobile et dotée d'une alimentation à batterie autonome. Une telle caméra mobile peut être déplacée dans une zone particulière de la cabine, par exemple pour visualiser l'office 15, un siège Sn où est installé un passager malade (ou susceptible de le devenir), un enfant seul, une personne âgée ou un équipement spécial, etc., nécessitant une attention suivie.

De plus, les tablettes 2T sont également en liaison sans fil avec un portique de détection métallique intégré dans un encadrement 2E séparant le sas d'accueil des passagers 2A (cf. figure 1) de l'espace d'installation des passagers 2B constituant l'essentiel de la cabine 2.

Par ailleurs, dans le cockpit de pilotage 3 de l'avion 1 illustré en figure 3, accessible par la porte 8, le support de visualisation 3A des flux images provenant des caméras vidéo 21a à 23a, 21b à 23b, 24 à 28 (cf. figure 1) est un combiné d'affichage fixe, installé sur une embase 3E du cockpit 3. Alternativement, ce combiné peut être libérable.

Le combiné d'affichage 3A est en liaison câblée L1 avec un routeur 12, situé dans la cabine 2, qui reçoit les signaux d'images et de sons des caméras vidéo. Un serveur 11 est également connecté au routeur 12 par le câble L1. Alternativement, le combiné d'affichage 3A est en liaison sans fil avec une antenne d'émission / réception 20A comme les tablettes 2T de la cabine 2 (figure 2), avec les détecteurs de fumée / incendie 6D, les commandes de verrouillage / déverrouillage 6V des portes 7 à 10 de la cabine 2 (cf. figure 2).

En référence à la figure 4, le cargo 4 de l'avion 1 est équipé, outre de caméras vidéo 25 et 26 munies d'un micro 20M, de deux détecteurs de fumée / incendie 6D et d'une commande de verrouillage / déverrouillage 6V des portes / trappes d'accès 41 au cargo 4. Le système selon l'invention donne des droits d'accès à distance à ces éléments clés selon la fonction du membre d'équipage.

De manière générale (en référence aux figures 1 à 4), les caméras vidéo 21a à 23a, 21b à 23b, 24 à 28 ont des moyens mécaniques, optiques et électroniques (cf. figure 5) de variation de champ de vision et de zoom, ces moyens étant commandés par liaison sans fil à partir des supports de visualisation, tablettes 2T de la cabine 2 et combiné d'affichage 3A du cockpit 3. Avantageusement, sont cryptées les connexions des supports de visualisation 2T, 3A aux éléments clés, aux caméras vidéo et à d'autres supports (comme le système de données d'intercommunication de la cabine détaillé ci-après). Dans la suite du texte, la référence commune aux supports de visualisation 2T, 3A se rapporte aux figures 1, 2 ou 3 où ces références 2T ou 3A apparaissent.

De plus, le traitement numérique des données d'images et de sons, ainsi que l'enregistrement de ces données, est réparti entre des modules de traitement équipant les caméras vidéo 21a à 23a, 21b à 23b, 24 à 28, les supports de visualisation, tablette 2T et combiné d'affichage 3A, et le serveur 11 situé avantageusement dans le cockpit (cf. figure 3), de liaison à une base située au sol via le routeur 12.

En référence à la vue en coupe schématique de la figure 5, la caméra 20, qui peut servir de caméra 21a à 23a, 21b à 23b, 24 à 26 selon l'exemple de réalisation, comporte: un objectif à focale variable 51, une bague de réglage du champ de vision 52, un boîtier électronique 53 contenant un capteur 53c photosensible à couplage de charges (CCD) couplé à une carte de traitement numérique de signal 54. En sortie de caméra, une antenne d'émission / réception 20A émet des signaux vidéo et reçoit des signaux de commande des supports électroniques de visualisation 2T, 3A. La caméra est équipée d'un microphone 20M, couplé à une carte de conversion 20C du son en un signal transmis à la carte de traitement numérique 54, ainsi que d'un éclairage à diodes 59.

La caméra 20 est également équipée de sondes de température 55 et de pression 56, ces sondes étant couplées à la carte de traitement numérique 54. La carte de conversion du son 20C et la carte de traitement numérique 54 forment un module de traitement numérique de données 50.

Ce module de traitement 50 des données d'images et de signaux sonores fournit aux supports électroniques de visualisation 2T, 3A, outre des flux d'images et de son, des données auxiliaires internes de visibilité en fonction de la teneur en fumée, de température, de pression et de durées pour une surveillance automatisée. Un tel traitement est utilisé en configuration de surveillance active, en particulier en paramétrage automatique, pour fournir des alarmes et des alertes modulées en fonction du degré d'état non sécurisé de l'enceinte et de la phase de vol, comme cela sera décrit plus loin.

En outre, les données d'altitude, de température et de pression internes et externes à l'appareil sont fournies aux supports de visualisation 2T et 3A, ainsi que les données de géolocalisation issues d'une centrale avionique et transmises aux supports de visualisation 2T, 3A par liaison WIFI via des transpondeurs internes en modes A / C. Alternativement, un transpondeur de la centrale avionique émet un signal GPS dans la cabine via un répéteur qui est lu par des puces GPS intégrées aux supports de visualisation 2T, 3A.

Les supports de visualisation sont alors interconnectés au système de données d'intercommunication de la cabine (en abrégé CIDS). Le CIDS permet de commander les organes de confort de la cabine (éclairage, ventilation, pressurisation, liaison avec les portes). Les supports de visualisation 2T et 3A permettent alors de gérer à distance les données fournies par le CIDS.

Pendant les différentes phases d'un vol, les supports de visualisation 2T et 3A sont utilisés de la manière suivante.

Avant le décollage, chaque membre d'équipage met en route le support de visualisation 2T et 3A dédié, et déverrouille ce support par la double lecture d'un badge personnel. Alternativement, le support de visualisation 2T et 3A est déverrouillé par un équipement de reconnaissance biométrique ou par l'entrée d'un code personnalisé. Les membres d'équipage vérifient le fonctionnement des différentes configurations des supports de visualisation 2T et 3A. Selon la fonction du membre d'équipage, le niveau d'accès aux différentes configurations est modulé.

Pendant la phase de décollage, définie par les données d'état - accélération, variation d'altitude, trajectoire - fournies par la centrale avionique ou alternativement par les répéteurs, l'affichage des supports de visualisation 2T et 3A est réglée de manière fixe, comme illustré par la figure 6a, sur un mode d'affichage en configuration automatique figée 61 dite « de décollage ». Cette configuration figée, que ce soit en décollage ou pendant toute phase de vol critique (phases de turbulence ou d'atterrissage), permet de recevoir des informations provenant du cockpit ou du sol. En configuration figée, les tablettes 2T sont avantageusement fixées en cabine sur un emplacement approprié - par exemple une cloison de séparation verticale C1 - en face des membres d'équipage de cabine assis sur les sièges dédiés S1, S2 (cf. figure3).

Lorsque la phase de décollage est terminée, l'affichage des supports de visualisation 2T et 3A est alors libéré par le module de traitement des données interne au support 2T ou 3A. Le membre d'équipage peut basculer sur une configuration simple 62 ou en mosaïque 63 des images fournies par les caméras vidéo 21a à 23a, 21b à 23b, 24 à 26 à 28, comme illustré respectivement par les figures 6b et 6c. Le passage entre les configurations simple 62 et mosaïque 63 est effectué manuellement par une commande dédiée 13, prévue dans le module de traitement de données interne audit support 2T ou 3A.

Des alarmes peuvent être déclenchées par la tablette 2T à partir de détection d'anomalie dès ce stade ou à un stade plus avancée, avec des états non sécurisés correspondant à une configuration active d'alerte (cf. figure 6g). Par exemple, sur la configuration simple de la figure 6b visualisant la cabine à partir d'une caméra vidé (ou sur la configuration active d'alerte de la figure 6g en relation avec l'alarme Aa), des zones où apparaissent des anomalies, un porte-bagage ouvert 62a ou une personne 62b circulant pendant une turbulence, sont être entourées de rectangles rouges, respectivement R1 et R2, pour être transmis au membre d'équipage prêt à intervenir.

D'autres configurations illustrées respectivement par les figures 6d à 6g peuvent alors être affichées par regroupement selon des modes appropriés.

En mode communication, une configuration de transmission d'informations 64 (figure 6d) de données auxiliaires, est transmise aux autres supports de visualisation 2T ou 3A, ces données pouvant être accompagnées d'observations personnelles faites sur les images fournies par les caméras 21a à 23a, 21b à 23b, 24 à 26 à 28.

Toujours en mode communication, une configuration de diffusion 65 (figure 6e) déclenche une insertion d'information de sécurité prioritaire dans les programmes de « divertissement » sur les équipements électroniques des sièges des passagers. Ces communications sont cryptées.

En mode surveillance, une configuration de visualisation passive choisie entre les configurations d'affichage figée, simple et mosaïque (figures 6a à 6c) et une configuration de comparaison de données 66 (figure 6f) à partir des informations fournies par la géolocalisation et l'analyse des flux d'images et de sons transmis aux supports de visualisation 2T et 3A.

Dans cette dernière configuration 66, les variations des données auxiliaires sont relevées et fournies par le module de traitement des données d'image et de son des caméras, de la centrale avionique et/ou de la géolocalisation en combinaison avec les données des répéteurs: variations de températures interne et externe Txᵢ et Txₑ, par exemple celles des offices, de l'altitude Hx, des pressions internes et externe Pxi et Pxe, des données de niveau sonore Sx, de visibilité Vx, et/ou détermination de durée Dx écoulée depuis le début d'un événement Ex pouvant modifier sensiblement le flux d'images d'une même prise de vue: un passager quitte son siège ou y retourne, un membre d'équipage passe dans le champ, un regroupement de personnes, un état de verrouillage d'une porte de toilettes.

Une corrélation de cohérence de signal entre les prises de vue est établie afin de fiabiliser les valeurs des données auxiliaires. Les données auxiliaires évolutives sont alors comparées à des valeurs de données de même type enregistrées dans le module de traitement. Ces valeurs traduisent des degrés modulés d'états de sécurisation allant d'un état parfaitement sécurisé Es1 à un état juste sécurisé Es10, puis d'un état non sécurisé temporaire Ens1 à un état totalement non sécurisé Ens10. Selon l'état de sécurisation de la situation réelle dans la cabine 2, le cockpit 3 ou le cargo 4 (figure 1), un état sécurisé ou non sécurisé entre Es1 et Ens10 est sélectionné. Les degrés d'état non sécurisé sélectionnés par différents supports de visualisation 2T ou 3A sont comparés pour fiabiliser un état non sécurisé sélectionné par corrélation.

Des séquences audio / vidéo sont automatiquement enregistrées à partir de la sélection du premier degré d'état non sécurisé Ens1, ces enregistrements permettront de constituer des moyens d'investigation ou d'alimenter une base d'analyse de situations critiques. L'état non sécurisé Ens1 peut être, par exemple, une personne qui quitte son siège pendant une phase de turbulences où il est précisément obligatoire, pour tout passager, de rester à son siège avec sa ceinture de sécurité bouclée. Avantageusement, des alarmes AI issues des tablettes 2T avertissent automatiquement les membres d'équipage de telles situations qui justifient du classement en états non sécurisés. Par exemple, si une visibilité Vx est inférieure à un seuil donné, une alarme est déclenchée.

De plus, toujours à partir de l'état non sécurisé Ens1, le support de visualisation 2T ou 3A passe en configuration active d'alerte 67 (figure 6g) dans laquelle des actions modulées Am sont proposées: le déclenchement d'une douche et/ou de l'inertage d'un déchet ou d'un paquet au niveau des détecteurs d'incendie / fumée 6D (cf. figure 2), le verrouillage de l'une des portes 7 à 10 (cf. figures 2 et 3), le blocage de l'accès à l'office, l'alerte à la base au sol. Ainsi, tout danger potentiel devrait être considéré en cours de neutralisation.

Puis des actions modulées sont automatiquement déclenchées à partir de la sélection d'un état non sécurisé élevé, l'état Ens5 dans l'exemple.

A compter de la sélection de l'état non sécurisé Ens7, les supports de visualisation sont coupés par l'entrée d'un code de désactivation ou, alternativement, par une double lecture d'un badge ou d'une mesure biométrique, ou encore par une désactivation automatique, puis les supports de visualisation 2T et 3A basculent en mode enregistrement.

Dans les autres phases de vol critiques - en cas de turbulences ou à l'atterrissage - la configuration des supports de visualisation 2T et 3A passent en configuration automatique figée du décollage.

L'invention n'est pas limitée aux exemples décrits ou représentés. Il est par exemple avantageux d'utiliser les liaisons entre l'avion et le sol pour fournir des mises à jour aux configurations des supports de visualisation.

Par ailleurs, le nombre et la répartition des caméras vidéo ou des supports de visualisation sont adaptés à l'architecture des enceintes. Les connexions sans fil sont à double sens de transmission, afin que les supports de visualisation puissent recevoir les données des capteurs / éléments clés et émettre des commandes à ces capteurs / éléments clés.

## Revendications

1. Procédé de surveillance et de sécurisation optimisées d'au moins une enceinte (2, 3, 4) de véhicule (1), notamment un cockpit de pilotage (3), une cabine passagers (2) et/ou un cargo de stockage (4) d'un avion (1), dans lequel une ou des prises de vue (21a à 23a, 21b à 23b; 24; 25, 26), réparties dans l'enceinte (2, 3, 4) pour définir un champ de vision sur sensiblement toute l'enceinte (2, 3, 4), fournissent dans une étape de transmission des flux d'images à au moins un support de visualisation mobile (2T) pouvant se déplacer avec un membre d'équipage, rester à chaque instant en communication avec lui et se connecter par liaison sans fil (20A) à d'autres supports mobiles (2T) et/ou fixes (3A) ainsi qu'à des éléments clés (6D, 6V) de l'enceinte (2, 3, 4) dans des zones sensibles au plan sécuritaire (7 à 10, 41), où le ou chaque support de visualisation (2T) étant paramétré selon différents modes de visualisation permettant de basculer, à chaque mode, entre des configurations d'affichage (61 à 63), des configurations de transmission d'information (64, 65), et des configurations de surveillance passive et active d'alerte de l'enceinte, et où, si un degré d'état non sécurisé (Ens1 à Ens10) est sélectionné pour définir la situation sécuritaire de l'enceinte (2, 3, 4), le support de visualisation (2T) passe en configuration active d'alerte (67) dans laquelle des actions modulées sont proposées sur les éléments clés (6D, 6V), **caractérisé en ce que** des alarmes (Al) et des actions modulées (Am) sont automatiquement déclenchées selon le degré d'état non sécurisé sélectionné (Ens1 à Ens10) à partir d'un traitement d'image et/ou du son, et transmis aux membres d'équipage en fonction de la phase de transport.

2. Procédé de surveillance et de sécurisation optimisées selon la revendication 1, dans lequel les modes de visualisation donnent accès à au moins certaines des configurations suivantes: en mode affichage entre une configuration d'affichage simple (62), en mosaïque (63) et figée (61), en mode communication entre des configurations de transmission d'informations (64) et de transmission d'annonces de sécurité (65) de transmission à un système de visualisation individualisé dit de divertissement destiné à chaque passager, en mode surveillance d'enceinte entre une configuration de visualisation passive choisie entre les configurations d'affichage (61, 62, 63) et une configuration de comparaison de données auxiliaires évolutives (66) dans les images visualisées avec des données enregistrées traduisant différents degrés d'états sécurisés (Es1 à Es10) et non sécurisés (Ens1 à Ens10.

3. Procédé de surveillance et de sécurisation optimisées selon la revendication 1, dans lequel les prises de vue (21a à 23a, 21b à 23b, 24 à 26) sont associées à des prises sonores (20M, 20C), à des détections de température (55) et/ou de pression (56).

4. Procédé de surveillance et de sécurisation optimisées selon l'une quelconque des revendications 1 ou 2, dans lequel les prises de vue (21a à 23a, 21b à 23b, 24 à 26) sont opérées dans une bande spectrale choisie entre la bande visible - proche infrarouge et la bande infrarouge afin de détecter des températures supérieures à une valeur prédéfinie et/ou une vision de nuit non intrusive.

5. Procédé de surveillance et de sécurisation optimisées selon l'une quelconque des revendications précédentes, dans lequel les configurations de visualisation passive (61 à 63) des flux d'images affichent comme données auxiliaires évolutives utiles à la surveillance des données techniques relatives à ces images, en particulier des données de variation de température en enceinte (Txi) et/ou à l'extérieur (Txe) du véhicule (1), d'altitude (Hx), de visibilité (Vx), de pression en enceinte (Pxi) et/ou à l'extérieur (Pxe) du véhicule (1), des données sonores (Sx) et/ou de durée (Dx) écoulée depuis le début d'un événement pouvant modifier sensiblement le flux d'images d'une même prise de vue (21a à 23a, 21b à 23b, 24 à 26) ou un état de verrouillage d'un élément clé (7 à 10, 41).

6. Procédé de surveillance et de sécurisation optimisées selon l'une quelconque des revendications précédentes, dans lequel au moins une prise de vue (27, 28) est installée à l'extérieur du véhicule (1), en particulier derrière une porte (7)/hublot (Ha) et/ou une peau de véhicule.

7. Procédé de surveillance et de sécurisation optimisées selon l'une quelconque des revendications précédentes, dans lequel les prises de vue transmettent également les flux d'images et de sons à au moins un support de visualisation fixe (3A) situé dans le poste de pilotage (3) du véhicule (1).

8. Procédé de surveillance et de sécurisation optimisées selon l'une quelconque des revendications précédentes, dans lequel les modes et les configurations (61 à 66) du support de visualisation (2T, 3A) sont choisis par un membre d'équipage commercial / technique qui gère ledit support (2T, 3A) selon la phase de transport, notamment selon la phase de vol pour un avion (1).

9. Procédé de surveillance et de sécurisation optimisées selon l'une quelconque des revendications précédentes, dans lequel le support de visualisation (2T, 3A) identifie par biométrie ou par codage chaque membre d'équipage habilité à utiliser ce support avec des configurations (61 à 67) prédéfinies pour ce membre d'équipage selon ses fonctions.

10. Procédé de surveillance et de sécurisation optimisées selon l'une quelconque des revendications précédentes, dans lequel, dans le cas où le véhicule est un avion (1), la configuration du support de visualisation est figée selon une configuration automatique (61) pendant des phases de vol critiques de décollage, d'atterrissage et/ou de turbulences, en fonction de données d'état fournies par la centrale avionique ou fournies par géolocalisation en liaison avec des données des répéteurs A / C.

11. Procédé de surveillance et de sécurisation optimisées selon l'une quelconque des revendications précédentes, dans lequel les prises de vue (21a à 23a, 21b à 23b, 24 à 28) ont un champ de vision variable, en particulier champ réduit, grand champ et panoramique, activé par action sur une commande du support de visualisation (2T, 3A) qui transmet des signaux de réglage des champs de vision aux prises de vue (21a à 23a, 21b à 23b, 24 à 26).

12. Procédé de surveillance et de sécurisation optimisées selon l'une quelconque des revendications précédentes, dans lequel la transmission d'images, la transmission de signaux de réglage de champ de vision et les connexions sans fil aux éléments clés (6D, 6V) sont cryptées.

13. Procédé de surveillance et de sécurisation optimisées selon l'une quelconque des revendications précédentes, dans lequel une corrélation de cohérence de signal entre les prises de vue (21a à 23a, 21b à 23b, 24 à 28) est établie afin de fiabiliser les données auxiliaires évolutives (Tx, Hx, Px, Sx, Dx) et, le cas échéant, le degré d'état sécurisé (Es1 à Es10) ou non sécurisé (Ens1 à Ens10) sélectionné.

14. Procédé de surveillance et de sécurisation optimisées selon l'une quelconque des revendications précédentes, dans lequel les capacités de traitement des données d'images sont réparties entre les prises de vue (21a à 23a, 21b à 23b, 24 à 28) et les supports de visualisation (2T, 3A).

15. Procédé de surveillance et de sécurisation optimisées selon l'une quelconque des revendications précédentes, dans lequel des séquences audio / vidéo sont enregistrées à partir de la sélection d'un premier degré d'état non sécurisé (Ens1).

16. Procédé de surveillance et de sécurisation optimisées selon l'une quelconque des revendications précédentes, dans lequel des liaisons entre le véhicule (1) et le sol fournissent des mises à jour des configurations (61 à 67) des supports de visualisation (2T, 3A).

17. Procédé de surveillance et de sécurisation optimisées selon l'une quelconque des revendications précédentes, dans lequel à partir d'un degré d'état non sécurisé (Ens1 à Ens10), les supports de visualisation (2T, 3A) sont coupés selon un mode choisi entre l'entrée d'un code de désactivation, une double lecture de reconnaissance, en particulier d'un badge ou équivalent, et une désactivation automatique, puis les supports de visualisation (2T, 3A) basculent en mode enregistrement.

18. Système de surveillance et de sécurisation optimisées de l'intérieur d'une enceinte de véhicule, notamment un cockpit de pilotage (3), une cabine passagers (2) et/ou un cargo de stockage (4) d'un avion (1), destiné à mettre en oeuvre le procédé selon l'une quelconque des revendications précédentes, comportant une ou des caméras vidéo (21a à 23a, 21b à 23b, 24 à 26) réparties dans l'enceinte (2 à 4), de sorte à définir un champ de vision sur sensiblement toute l'enceinte (2 à 4), des supports de visualisation mobiles (2T) dédiés à des membres du personnel commercial de l'enceinte (2) aptes, via des moyens d'émission / réception (20A) de liaison sans fil adaptés, à recevoir des flux d'images émis par les caméras vidéo (21a à 23a, 21b à 23b, 24 à 26) et à leur transmettre des commandes, et à communiquer en transmission bilatérale avec des sources de données auxiliaires (11) ainsi qu'avec des moyens de verrouillage / déverrouillage (6V) de l'enceinte (2 à 4) agencés dans des zones sensibles (7 à 10, 41) au plan sécuritaire, **caractérisé en ce que** des moyens d'actions modulées peuvent être déclenchés sur les moyens de verrouillage / déverrouillage (6V), ainsi que des alarmes (Al) et des actions modulées (Am) selon le degré d'état non sécurisé sélectionné (Ens1 à Ens10) à partir d'un traitement d'image et/ou du son, et transmis aux membres d'équipage en fonction de la phase de transport.

19. Système de surveillance et de sécurisation optimisées selon la revendication précédente, dans lequel les caméras vidéo (21a à 23a, 21b à 23b, 24 à 26) sont associées à un microphone (20M) couplé à une carte de traitement du son en signal de transmission (20C), ainsi qu'à des sondes de température (55) et de pression (56).

20. Système de surveillance et de sécurisation optimisées selon la revendication précédente, dans lequel les caméras vidéo (21a à 23a, 21b à 23b, 24 à 26) sont numériques à capteurs (53c) photosensibles dans des bandes spectrales pouvant basculer entre la bande visible - proche infrarouge et la bande infrarouge, et sont équipées d'un module de traitement numérique (50) des signaux provenant des capteurs photosensibles (53c), de la carte de traitement du son (20c) ainsi que des signaux transmis par les sondes de température (55) et de pression (56).

21. Système de surveillance et de sécurisation optimisées selon l'une quelconque des revendications 18 à 20, dans lequel au moins une caméra vidéo (21a à 23a, 21b à 23b) est mobile et autonome en alimentation électrique.

22. Système de surveillance et de sécurisation optimisées selon l'une quelconque des revendications 18 à 21, dans lequel au moins un objectif de caméra vidéo (27, 28) pourvu de moyens d'éclairage dédiés (59) est monté à l'extérieur du véhicule, en particulier sous ou derrière un hublot (Ha) ou une porte (7) dans le cas où le véhicule est un avion (1), pour notamment surveiller des volets (V1, V2) et des moteurs (M, M2) de l'avion (1).

23. Système de surveillance et de sécurisation optimisées selon l'une quelconque des revendications 18 à 22, dans lequel le véhicule ayant un poste de pilotage, un cockpit (3) dans le cas d'un avion (1), au moins un support de visualisation fixe (3A) est installé sur une embase (3E) de ce poste de pilotage (3).

24. Système de surveillance et de sécurisation optimisées selon l'une quelconque des revendications 18 à 23, dans lequel les caméras vidéo (21a à 23a, 21b à 23b, 24 à 28) ont des moyens de variation du champ de vision et/ou de zoom commandés par le support de visualisation (2T, 3A) via les moyens d'émission / réception de liaison sans fil (20A).

25. Système de surveillance et de sécurisation optimisées selon l'une quelconque des revendications 18 à 24, dans lequel des moyens d'enregistrement des images vidéo (11) et de sons des caméras vidéo (21a à 23a, 21b à 23b, 24 à 28) sont prévus en connexion avec les supports de visualisation (2T, 3A) soit dans le véhicule (1) soit au sol par des moyens adaptés d'émission / réception de liaison sans fil (11, 12).

26. Système de surveillance et de sécurisation optimisées selon l'une quelconque des revendications 18 à 25, dans lequel les moyens de verrouillage (6V) qui équipent des portes d'accès (8) d'enceinte (3) d'un véhicule (1) et d'accès / sortie du véhicule (7), des portes d'évacuation d'urgence (10), et des portes de toilette (9) transmettent par liaison sans fil des informations d'état de verrouillage / déverrouillage aux supports électroniques de visualisation (2T, 3A).

27. Système de surveillance et de sécurisation optimisées selon l'une quelconque des revendications 18 à 26, dans lequel les supports de visualisation (2T, 3A), équipés d'une puce de géolocalisation d'une communication sans fil reliée à un transpondeur interne en modes A / C lui-même relié à une centrale avionique, sont en liaison véhicule / sol via un serveur sans fil (11) et un routeur (12), le routeur (12) étant en connexion émetteur / récepteur avec une base au sol, afin de transmettre au sol des données relatives à l'état de sécurisation du véhicule (1) et de recevoir de la base au sol des mises à jour programmées de données et nouvelles configurations à intégrer dans les supports de visualisation (2T, 3A).

## Patentansprüche

1. Verfahren zur optimierten Überwachung und Sicherung wenigstens eines Raumes (2, 3, 4) eines Fahrzeugs (1), insbesondere eines Steuercockpits (3), einer Passagierkabine (2) und/oder eines Frachtraumes (4) eines Flugzeugs (1), wobei eine oder mehrere Bildaufnahmemittel (21a bis 23a, 21b bis 23b; 24; 25, 26), die in dem Raum (2, 3, 4) verteilt sind, um ein Sichtfeld auf im Wesentlichen den gesamten Raum (2, 3, 4) zu definieren, in einem Übertragungsschritt Bilderströme wenigstens einem mobilen Visualisierungsmittel (2T) liefern, das sich mit einem Crewmitglied bewegen kann, zu jedem Zeitpunkt in Kommunikation mit ihm bleiben kann und sich über eine drahtlose Verbindung (20A) mit anderen mobilen (2T) und/oder festen (3A) Mitteln sowie mit Schlüsselelementen (6D, 6V) des Raumes (2, 3, 4) in sicherheitssensiblen Bereichen (7 bis 10, 41) verbinden kann, wobei das oder jedes Visualisierungsmittel (2T) gemäß verschiedenen Visualisierungsmodi parametriert ist, die es ermöglichen, in jedem Modus zwischen Anzeigekonfigurationen (61 bis 63), Informationsübertragungskonfigurationen (64, 65) und Konfigurationen der passiven und aktiven Alarmüberwachung des Raumes umzuschalten, und wobei, falls ein Grad eines nicht sicheren Zustands (Ens1 bis Ens10) ausgewählt wird, um die Sicherheitssituation des Raumes (2, 3, 4) zu definieren, das Visualisierungsmittel (2T) in eine aktive Alarmkonfiguration (67) übergeht, in welcher angepasste Aktionen an den Schlüsselelementen (6D, 6V) vorgeschlagen werden,
**dadurch gekennzeichnet, dass** Alarme (Al) und angepasste Aktionen (Am) je nach dem ausgewählten Grad eines nicht sicheren Zustands (Ens1 bis Ens10) ausgehend von einer Bild- und/oder Tonverarbeitung automatisch ausgelöst und in Abhängigkeit von der Transportphase zu den Crewmitgliedern übertragen werden.

2. Verfahren zur optimierten Überwachung und Sicherung nach Anspruch 1, wobei die Visualisierungsmodi den Zugang zu wenigstens einigen der folgenden Konfigurationen ermöglichen: im Anzeigemodus zu einer einfachen (62), mosaikartigen (63) und eingefrorenen (61) Anzeigekonfiguration, im Kommunikationsmodus zu Konfigurationen der Informationsübertragung (64) und der Übertragung von Sicherheitsansagen (65) zur Übertragung zu einem für die einzelnen Passagiere bestimmten individualisierten Visualisierungssystem, dem sogenannten Entertainmentsystem, im Raumüberwachungsmodus zu einer Konfiguration der passiven Visualisierung, die aus den Anzeigekonfigurationen (61, 62, 63) ausgewählt ist, und einer Konfiguration des Vergleichs von evolutiven Hilfsdaten (66) in den visualisierten Bildern mit gespeicherten Daten, die verschiedene Grade von sicheren (Es1 bis Es10) und nicht sicheren Zuständen (Ens1 bis Ens10) ausdrücken.

3. Verfahren zur optimierten Überwachung und Sicherung nach Anspruch 1, wobei die Bildaufnahmemittel (21a bis 23a, 21b bis 23b, 24 bis 26) Tonaufnahmemitteln (20M, 20C), Temperatur- (55) und/oder Druckdetektionsmitteln (56) zugeordnet sind.

4. Verfahren zur optimierten Überwachung und Sicherung nach einem der Ansprüche 1 oder 2, wobei die Bildaufnahmemittel (21a bis 23a, 21b bis 23b, 24 bis 26) in einem Spektralband betrieben werden, das aus dem sichtbaren bis nahen Infrarotbereich und dem Infrarotbereich ausgewählt ist, um Temperaturen zu erfassen, die höher als ein vordefinierter Wert sind, und/oder einem unaufdringlichen Nachtsichtbetrieb.

5. Verfahren zur optimierten Überwachung und Sicherung nach einem der vorhergehenden Ansprüche, wobei die Konfigurationen der passiven Visualisierung (61 bis 63) der Bilderströme als evolutive Hilfsdaten, die für die Überwachung von Nutzen sind, technische Daten anzeigen, die sich auf diese Bilder beziehen, insbesondere Daten der Änderung der Temperatur im Raum (Txi) und/oder außerhalb (Txe) des Fahrzeugs (1), der Höhe (Hx), der Sichtweite (Vx), des Drucks im Raum (Pxi) und/oder außerhalb (Pxe) des Fahrzeugs (1), Tondaten (Sx) und/oder Daten der Dauer (Dx) seit dem Beginn eines Ereignisses, das den Bilderstrom ein und desselben Bildaufnahmemittels (21a bis 23a, 21b bis 23b, 24 bis 26) wesentlich verändern kann, oder einen Verriegelungszustand eines Schlüsselelements (7 bis 10, 41).

6. Verfahren zur optimierten Überwachung und Sicherung nach einem der vorhergehenden Ansprüche, wobei wenigstens ein Bildaufnahmemittel (27, 28) außerhalb des Fahrzeugs (1) installiert ist, insbesondere hinter einer Tür (7)/einem Fenster (Ha) und/oder einer Fahrzeughaut.

7. Verfahren zur optimierten Überwachung und Sicherung nach einem der vorhergehenden Ansprüche, wobei die Bildaufnahmemittel die Bilder- und Tonströme außerdem zu wenigstens einem festen Visualisierungsmittel (3A) übertragen, das sich im Steuerstand (3) des Fahrzeugs (1) befindet.

8. Verfahren zur optimierten Überwachung und Sicherung nach einem der vorhergehenden Ansprüche, wobei die Modi und die Konfigurationen (61 bis 66) des Visualisierungsmittels (2T, 3A) von einem kaufmännischen/technischen Crewmitglied, welches das Mittel (2T, 3A) verwaltet, je nach der Transportphase gewählt werden, insbesondere je nach der Flugphase bei einem Flugzeug (1).

9. Verfahren zur optimierten Überwachung und Sicherung nach einem der vorhergehenden Ansprüche, wobei das Visualisierungsmittel (2T, 3A) durch Biometrie oder durch Codierung jedes Crewmitglied identifiziert, das berechtigt ist, dieses Mittel zu benutzen, mit für dieses Crewmitglied gemäß seinen Funktionen vordefinierten Konfigurationen (61 bis 67).

10. Verfahren zur optimierten Überwachung und Sicherung nach einem der vorhergehenden Ansprüche, wobei in dem Falle, in dem das Fahrzeug ein Flugzeug (1) ist, die Konfiguration des Visualisierungsmittels während der kritischen Flugphasen des Starts, der Landung und/oder von Turbulenzen gemäß einer automatischen Konfiguration (61) eingefroren wird, in Abhängigkeit von Zustandsdaten, die von der Avionikeinheit geliefert werden oder durch Geolokalisierung in Verbindung mit Daten der A/C Repeater geliefert werden.

11. Verfahren zur optimierten Überwachung und Sicherung nach einem der vorhergehenden Ansprüche, wobei die Bildaufnahmemittel (21a bis 23a, 21b bis 23b, 24 bis 28) ein variables Sichtfeld aufweisen, insbesondere ein reduziertes Sichtfeld, ein großes Sichtfeld und ein Panoramasichtfeld, das durch Betätigung eines Bedienelements des Visualisierungsmittels (2T, 3A) aktiviert wird, welches Signale zum Einstellen der Sichtfelder zu den Bildaufnahmemitteln (21a bis 23a, 21b bis 23b, 24 bis 26) überträgt.

12. Verfahren zur optimierten Überwachung und Sicherung nach einem der vorhergehenden Ansprüche, wobei die Übertragung von Bildern, die Übertragung von Signalen zum Einstellen eines Sichtfeldes und die drahtlosen Verbindungen zu den Schlüsselelementen (6D, 6V) verschlüsselt werden.

13. Verfahren zur optimierten Überwachung und Sicherung nach einem der vorhergehenden Ansprüche, wobei eine Beziehung der Signalkohärenz zwischen den Bildaufnahmemitteln (21a bis 23a, 21b bis 23b, 24 bis 28) hergestellt wird, um die Zuverlässigkeit der evolutiven Hilfsdaten (Tx, Hx, Px, Sx, Dx) und gegebenenfalls des gewählten Grades des sicheren (Es1 bis Es10) oder nicht sicheren Zustands (Ens1 bis Ens10) zu erhöhen.

14. Verfahren zur optimierten Überwachung und Sicherung nach einem der vorhergehenden Ansprüche, wobei die Verarbeitungskapazitäten für die Bilddaten zwischen den Bildaufnahmemitteln (21a bis 23a, 21b bis 23b, 24 bis 28) und den Visualisierungsmitteln (2T, 3A) verteilt sind.

15. Verfahren zur optimierten Überwachung und Sicherung nach einem der vorhergehenden Ansprüche, wobei die Audio-/Videosequenzen ab der Wahl eines ersten Grades eines nicht sicheren Zustands (Ens1) gespeichert werden.

16. Verfahren zur optimierten Überwachung und Sicherung nach einem der vorhergehenden Ansprüche, wobei die Verbindungen zwischen dem Fahrzeug (1) und dem Boden Aktualisierungen der Konfigurationen (61 bis 67) der Visualisierungsmittel (2T, 3A) liefern.

17. Verfahren zur optimierten Überwachung und Sicherung nach einem der vorhergehenden Ansprüche, wobei ab einem Grad eines nicht sicheren Zustands (Ens1 bis Ens10) die Visualisierungsmittel (2T, 3A) gemäß einem Modus ausgeschaltet werden, der aus der Eingabe eines Deaktivierungscodes, einem zweifachen Ablesen eines Erkennungsmittels, insbesondere eines Namensschildes oder äquivalenten Mittels, und einer automatischen Deaktivierung ausgewählt ist, und danach die Visualisierungsmittel (2T, 3A) in einen Speichermodus umschalten.

18. System zur optimierten Überwachung und Sicherung des Inneren eines Raumes eines Fahrzeugs, insbesondere eines Steuercockpits (3), einer Passagierkabine (2) und/oder eines Frachtraumes (4) eines Flugzeugs (1), welches dazu bestimmt ist, das Verfahren nach einem der vorhergehenden Ansprüche durchzuführen, und eine oder mehrere Videokameras (21a bis 23a, 21b bis 23b, 24 bis 26), die in dem Raum (2 bis 4) so verteilt sind, dass sie ein Sichtfeld auf im Wesentlichen den gesamten Raum (2 bis 4) definieren, umfasst, sowie für Mitglieder des Betriebspersonals des Raumes (2) vorgesehene mobile Visualisierungsmittel (2T), die geeignet sind, über angepasste Sende-/Empfangsmittel (20A) mit drahtloser Verbindung Bilderströme zu empfangen, die von den Videokameras (21a bis 23a, 21b bis 23b, 24 bis 26) gesendet werden, und zu ihnen Befehle zu übertragen, sowie mittels bilateraler Übertragung mit Hilfsdatenquellen (11) sowie mit Mitteln zur Verriegelung/Entriegelung (6V) des Raumes (2 bis 4), die in sicherheitssensiblen Bereichen (7 bis 10, 41) angeordnet sind, zu kommunizieren, **dadurch gekennzeichnet, dass** Mittel für angepasste Aktionen an den Mitteln zur Verriegelung/Entriegelung (6V) ausgelöst werden können, sowie Alarme (Al) und angepasste Aktionen (Am) je nach dem ausgewählten Grad eines nicht sicheren Zustands (Ens1 bis Ens10) ausgehend von einer Bild- und/oder Tonverarbeitung ausgelöst und in Abhängigkeit von der Transportphase zu den Crewmitgliedern übertragen werden können.

19. System zur optimierten Überwachung und Sicherung nach dem vorhergehenden Anspruch, wobei die Videokameras (21a bis 23a, 21b bis 23b, 24 bis 26) einem Mikrofon (20M), das mit einer Karte zur Verarbeitung des Tons zu einem Übertragungssignal (20C) gekoppelt ist, sowie Temperatur- (55) und Druckmessfühlern (56) zugeordnet sind.

20. System zur optimierten Überwachung und Sicherung nach dem vorhergehenden Anspruch, wobei die Videokameras (21a bis 23a, 21b bis 23b, 24 bis 26) digital sind, mit Sensoren (53c), die lichtempfindlich in Spektralbändern sind, die zwischen dem sichtbaren bis nahen Infrarotbereich und dem Infrarotbereich umschalten können, und mit einem Modul zur digitalen Verarbeitung (50) der Signale, die von den lichtempfindlichen Sensoren (53c) und der Karte zur Verarbeitung des Tons (20c) stammen, sowie der Signale, die von den Temperatur-(55) und Druckmessfühlern (56) übertragen werden, ausgestattet sind.

21. System zur optimierten Überwachung und Sicherung nach einem der Ansprüche 18 bis 20, wobei wenigstens eine Videokamera (21a bis 23a, 21b bis 23b) mobil ist und eine autonome Stromversorgung aufweist.

22. System zur optimierten Überwachung und Sicherung nach einem der Ansprüche 18 bis 21, wobei wenigstens ein Videokameraobjektiv (27, 28), das mit speziellen Beleuchtungsmitteln (59) versehen ist, außerhalb des Fahrzeugs angebracht ist, insbesondere unter oder hinter einem Fenster (Ha) oder einer Tür (7) in dem Falle, wenn das Fahrzeug ein Flugzeug (1) ist, um insbesondere Klappen (V1, V2) und Motoren (M, M2) des Flugzeugs (1) zu überwachen.

23. System zur optimierten Überwachung und Sicherung nach einem der Ansprüche 18 bis 22, wobei, wenn das Fahrzeug einen Steuerstand aufweist, ein Cockpit (3) im Falle eines Flugzeugs (1), wenigstens ein festes Visualisierungsmittel (3A) auf einem Sockel (3E) dieses Steuerstandes (3) installiert ist.

24. System zur optimierten Überwachung und Sicherung nach einem der Ansprüche 18 bis 23, wobei die Videokameras (21a bis 23a, 21b bis 23b, 24 bis 28) Mittel zur Änderung des Sichtfeldes und/oder zum Zoomen aufweisen, die durch das Visualisierungsmittel (2T, 3A) über die drahtlosen Sende-/Empfangsmittel (20A) gesteuert werden.

25. System zur optimierten Überwachung und Sicherung nach einem der Ansprüche 18 bis 24, wobei Mittel zur Speicherung der Videobilder (11) und von Tönen der Videokameras (21a bis 23a, 21b bis 23b, 24 bis 28) entweder im Fahrzeug (1) oder am Boden vorgesehen sind, die mit den Visualisierungsmitteln (2T, 3A) über angepasste Sende-/Empfangsmittel mit drahtloser Verbindung (11, 12) in Verbindung stehen.

26. System zur optimierten Überwachung und Sicherung nach einem der Ansprüche 18 bis 25, wobei die Verriegelungsmittel (6V), mit denen Zugangstüren (8) des Raumes (3) eines Fahrzeugs (1) und Zugangs-/Ausgangstüren (7) des Fahrzeugs, Notausgangstüren (10) und Toilettentüren (9) ausgestattet sind, über eine drahtlose Verbindung Informationen über den Verriegelungs-/Entriegelungszustand zu den elektronischen Visualisierungsmitteln (2T, 3A) übertragen.

27. System zur optimierten Überwachung und Sicherung nach einem der Ansprüche 18 bis 26, wobei die Visualisierungsmittel (2T, 3A), die mit einem Geolokalisierungs-Chip mit einer drahtlosen Kommunikation ausgestattet sind, der mit einem internen Transponder in den Modi A/C verbunden ist, der wiederum mit einer Avionikeinheit verbunden ist, sich über einen drahtlosen Server (11) und einen Router (12) in einer Fahrzeug/Boden-Verbindung befinden, wobei der Router (12) in einer Sendeempfänger-Verbindung mit einer Basis am Boden steht, um Daten, die den Sicherheitszustand des Fahrzeugs (1) betreffen, zum Boden zu übertragen und von der Basis am Boden programmierte Aktualisierungen von Daten und neue Konfigurationen, die in die Visualisierungsmittel (2T, 3A) zu integrieren sind, zu empfangen.

## Claims

1. A method of optimized monitoring and securing of at least one vehicle (1) enclosure (2, 3, 4), especially a piloting cockpit (3), a passenger cabin (2), and/or a cargo hold (4) of an airplane (1), in which one or more camera shots (21a to 23a, 21b to 23b; 24; 25, 26) distributed in the enclosure (2, 3, 4) to define a field of view of substantially the entire enclosure (2, 3, 4) provide, during a transmission stage, image streams to at least one mobile visualization medium (2T) which can move along with a crew member, remain in communication with him at all times and connect by wireless link (20A) to other mobile (2T) and/or fixed (3A) media, as well as to key elements (6D, 6V) of the enclosure (2, 3, 4) in regard to security-sensitive zones (7 to 10, 41) where the or, each visualization medium (2T) is parametrized according to different visualization modes, making it possible to switch, in each mode, between display configurations (61 to 63), information transmission configurations (64, 65), and passive and active alert monitoring configurations of the enclosure, and where, if a degree of nonsecure status (Ens1 to Ens10) is selected to define the security situation of the enclosure (2, 3, 4), the visualization medium (2T) changes to an active alert configuration (67) in which modulated actions are proposed on the key elements (6D, 6V), **characterized in that** the alarms (Al) and modulated actions (Am) are automatically triggered according to the degree of nonsecure status selected (Ens1 to Ens10), based on an image and/or audio processing, and transmitted to the crew members depending on the phase of transportation.

2. The method of optimized monitoring and securing as claimed in claim 1, wherein the modes of visualization provide access to at least certain of the following configurations: in display mode, between ordinary (62), thumbnail (63), and fixed (61) display configurations, in communication mode, between configurations of information transmission (64) and security announcement transmission (65) for transmission to a personalized so-called entertainment visualization system for each passenger, in monitoring mode of the enclosure, between a passive visualization configuration chosen from between the display configurations (61, 62, 63) and a configuration of comparison of auxiliary situational data (66) in the displayed images with recorded data showing different degrees of secure (Es1 to Es10) and nonsecure (Ens1 to Ens10) status.

3. The method of optimized monitoring and securing as claimed in claim 1, wherein the camera shots (21a to 23a, 21b to 23b, 24 to 26) are associated with audio recordings (20M, 20C) and detections of temperature (55) and/or pressure (56).

4. The method of optimized monitoring and securing as claimed in any one of claims 1 or 2, wherein the camera shots (21a to 23a, 21b to 23b. 24 to 26) are taken in a spectral band chosen from the visible/near infrared band and the infrared band in order to detect temperatures higher than a predefined value and/or a non-intrusive nocturnal vision.

5. The method of optimized monitoring and securing as claimed in any one of the preceding claims, wherein the passive visualization configurations (61 to 63) of the image streams show as auxiliary situational data useful to the monitoring technical data regarding these images, in particular data on the temperature variation in the enclosure (Txi) and/or outside (Txe) the vehicle (1), altitude (Hx), visibility (Vx), pressure in the enclosure (Pxi) and/or outside (Pxe) the vehicle (1), audio data (Sx) and/or data on elapsed time (Dx) since the start of an event liable to significantly modify the stream of images from one and the same camera shot (21a to 23a, 21b to 23b, 24 to 26), or a locking status of a key element (7 to 10, 41).

6. The method of optimized monitoring and securing as claimed in any one of the preceding claims, wherein at least one camera shot (27, 28) is installed outside the vehicle (1), in particular behind a door (7)/porthole (Ha) and/or a vehicle skin.

7. The method of optimized monitoring and securing as claimed in any one of the preceding claims, wherein the camera shots likewise transmit the streams of images and audio to at least one fixed visualization medium (3A) located in the piloting station (3) of the vehicle (1).

8. The method of optimized monitoring and securing as claimed in any one of the preceding claims, wherein the modes and the configurations (61 to 66) of the visualization medium (2T, 3A) are chosen by a commercial/technical crew member who manages said medium (2T, 3A) depending on the phase of transportation, especially depending on the flight phase for an airplane (1).

9. The method of optimized monitoring and securing as claimed in any one of the preceding claims, wherein the visualization medium (2T, 3A) identifies by biometrics or by code each crew member authorized to use that medium with predefined configurations (61 to 67) for that crew member, depending on their duties.

10. The method of optimized monitoring and securing as claimed in any one of the preceding claims, wherein, in the event that the vehicle is an airplane (1), the configuration of the visualization medium is fixed in an automatic configuration (61) during the critical flight phases of takeoff, landing, and/or turbulence, as a function of status data furnished by the avionics unit or furnished by geolocation in connection with the data of the A/C repeaters.

11. The method of optimized monitoring and securing as claimed in any one of the preceding claims, wherein the camera shots (21a to 23a, 21b to 23b, 24 to 28) have a variable field of view, in particular a reduced field, a wide field and a panoramic field, activated by action on a control of the visualization medium (2T, 3A) which transmits field of view setting signals to the camera shots (21a to 23a, 21b to 23b, 24 to 26).

12. The method of optimized monitoring and securing as claimed in any one of the preceding claims, wherein the transmission of images, the transmission of setting signals for the field of view, and the wireless connections to the key elements (6D, 6V) are encrypted.

13. The method of optimized monitoring and securing as claimed in any one of the preceding claims, wherein a signal consistency correlation between the camera shots (21a to 23a, 21b to 23b, 24 to 28) is established in order to ensure the integrity of the auxiliary situational data (Tx, Hx, Px, Sx, Dx) and, if necessary, the selected degree of secure (Es1 to Es10) or nonsecure (Ens1 to Ens10) status.

14. The method of optimized monitoring and securing as claimed in any one of the preceding claims, wherein the image data processing capacities are distributed between the camera shots (21a to 23a, 21b to 23b, 24 to 28) and the visualization media (2T, 3A).

15. The method of optimized monitoring and securing as claimed in any one of the preceding claims, wherein audio/video sequences are recorded based on the selection of a first degree of nonsecure status (Ens1).

16. The method of optimized monitoring and securing as claimed in any one of the preceding claims, wherein links between the vehicle (1) and the ground furnish updates for the configurations (61 to 67) of the visualization media (2T, 3A).

17. The method of optimized monitoring and securing as claimed in any one of the preceding claims, wherein starting from a degree of nonsecure status (Ens1 to Ens10), the visualization media (2T, 3A) are cut off according to a mode chosen from the entering of a deactivation code, a double recognition reading, especially of a badge or the like, and an automatic deactivation, after which the visualization media (2T, 3A) switch to recording mode.

18. A system of optimized monitoring and securing of the interior of a vehicle enclosure, especially a piloting cockpit (3), a passenger cabin (2), and/or a cargo hold (4) of an airplane (1), intended to implement the method as claimed in any one of the preceding claims, comprising one or more video cameras (21a to 23a, 21b to 23b, 24 to 26) distributed in the enclosure (2 to 4), so as to define a field of view of substantially the entire enclosure (2 to 4), mobile visualization media (2T) dedicated to members of the commercial personnel of the enclosure (2) able, via adapted wirelessly linked sending/receiving means (20A), to receive streams of images sent by the video cameras (21a to 23a, 21b to 23b, 24 to 26), and transmit commands to them, and communicate in two-way transmission with auxiliary data sources (11) and also with means of locking/unlocking (6V) the enclosure (2 to 4), situated in security-sensitive zones (7 to 10, 41), **characterized in that** means of modulated actions can be triggered on the means of locking/unlocking (6V), as well as alarms (Al) and modulated actions (Am) according to the degree of nonsecure status selected (Ens1 to Ens10), based on an image and/or audio processing, and transmitted to the crew members depending on the phase of transportation.

19. The system of optimized securing and monitoring as claimed in the preceding claim, wherein the video cameras (21a to 23a, 21b to 23b, 24 to 26) are associated with a microphone (20M) connected to a card for processing the audio into a transmission signal (20C), as well as temperature (55) and pressure (56) probes.

20. The system of optimized securing and monitoring as claimed in the preceding claim, wherein the video cameras (21a to 23a, 21b to 23b, 24 to 26) are digital with sensors (53c) which are photosensitive in spectral bands able to switch between the visible/near infrared band and the infrared band, and are outfitted with a digital processing module (50) of the signals coming from the photosensitive sensors (53c) and the audio processing card (20c), and the signals transmitted by the temperature (55) and pressure (56) probes.

21. The system of optimized securing and monitoring as claimed in any one of claims 18 to 20, wherein at least one video camera (21a to 23a, 21b to 23b) is mobile and has an autonomous electrical power supply.

22. The system of optimized securing and monitoring as claimed in any one of claims 18 to 21, wherein at least one video camera lens (27, 28) provided with dedicated lighting means (59) is mounted outside the vehicle, in particular beneath or behind a porthole (Ha) or a door (7) in the case in which the vehicle is an airplane (1), in particular to monitor the flaps (V1, V2) and the engines (M, M2) of the airplane (1).

23. The system of optimized securing and monitoring as claimed in any one of claims 18 to 22, wherein the vehicle having a piloting station, a cockpit (3) in the case of an airplane (1), at least one fixed visualization medium (3A) is installed on a base (3E) of this piloting station (3).

24. The system of optimized securing and monitoring as claimed in any one of claims 18 to 23, wherein the video cameras (21a to 23a, 21b to 23b, 24 to 28) have means of variation of the field of view and/or zoom controlled by the visualization medium (2T, 3A) via the wirelessly linked means of sending/receiving (20A).

25. The system of optimized securing and monitoring as claimed in any one of claims 18 to 24, wherein means of recording the video images (11) and audio of the video cameras (21a to 23a, 21b to 23b, 24 to 28) are provided in connection with the visualization media (2T, 3A), either in the vehicle (1) or on the ground, by adapted wirelessly linked means of sending/receiving (11, 12).

26. The system of optimized securing and monitoring as claimed in any one of claims 18 to 25, wherein the locking means (6V) which outfit the access doors (8) of the enclosure (3) of a vehicle (1) and the entry/exit from the vehicle (7), emergency evacuation doors (10), and bathroom doors (9) transmit by wireless link information on the locking/unlocking status to the electronic visualization media (2T, 3A).

27. The system of optimized securing and monitoring as claimed in any one of claims 18 to 26, wherein the visualization media (2T, 3A), outfitted with a geolocation chip for a wireless communication connected to an internal transponder in A/C modes, itself connected to an avionics unit, are in vehicle/ground link via a wireless server (11) and a router (12), the router (12) being in transmitter/receiver connection with a ground base, in order to transmit to ground data regarding the security status of the vehicle (1) and receive from the ground base scheduled data updates and new configurations to be integrated in the visualization media (2T, 3A).
